# EUROPÄISCHE PATENTSCHRIFT

(11) **EP 1 046 319 B1**
(45) Veröffentlichungstag und Bekanntmachung des Hinweises auf die Patenterteilung: **24.05.2006**
(21) Anmeldenummer: 99971997.4
(22) Anmeldetag: 28.09.1999
(51) Int. Cl.: H05B 3/26, H05B 3/28, G01N 27/406

(54) **KERAMISCHES SCHICHTSYSTEM UND VERFAHREN ZUR HERSTELLUNG EINER KERAMISCHEN HEIZEINRICHTUNG**
CERAMIC LAYER SYSTEM AND METHOD FOR PRODUCING A CERAMIC HEATING DEVICE
SYSTEME DE COUCHES CERAMIQUE ET PROCEDE DE PRODUCTION D'UN DISPOSITIF DE CHAUFFAGE CERAMIQUE

(30) Priorität: 11.11.1998 DE 19851966
(43) Veröffentlichungstag der Anmeldung: 25.10.2000
(73) Patentinhaber: ROBERT BOSCH GMBH, 70442 Stuttgart (DE)
(72) Erfinder: JACH, Olaf, D-71034 Boeblingen (DE)
(86) Internationale Anmeldenummer: PCT/DE1999/003112
(87) Internationale Veröffentlichungsnummer: WO 2000/028785

(56) Entgegenhaltungen:
- DE-C- 19 522 347
- US-A- 4 464 244
- US-A- 4 559 126

## Beschreibung

Die Erfindung betrifft ein keramisches Schichtsystem mit den im Oberbegriff des Anspruchs 1 genannten Merkmalen sowie ein Verfahren zur Herstellung einer keramischen Heizeinrichtung mit den im Oberbegriff des Patentanspruchs 7 genannten Merkmalen.

### Stand der Technik

Keramische Schichtsysteme der gattungsgemäßen Art werden beispielsweise bei keramischen Heizeinrichtungen in elektrochemischen Meßfühlern eingesetzt. Hierbei sind elektrische Widerstandsbahnen vorgesehen, die mäanderförmig verlaufen und zur Ausbildung einer keramischen Heizeinrichtung dienen. Mittels derartiger elektrochemischer Meßfühler ist die Bestimmung einer Sauerstoffkonzentration in einem Abgas von Verbrennungskraftmaschinen möglich, um die Einstellung eines Kraftstoff-Luft-Gemisches zum Betreiben der Verbrennungskraftmaschine vorzugeben. Die Meßfühler müssen im aktiven Bereich auf Temperaturen über zirka 300 °C erwärmt werden, um die notwendige Ionenleitfähigkeit eines Festelektrolyten zu erreichen. Hierzu dient die in den elektrochemischen Meßfühler integrierte keramische Heizeinrichtung.

Es ist bekannt, derartige Meßfühler als planare Lambda-Sonden in einer sogenannten Schichttechnik herzustellen. Hierbei werden einzelne Schichten übereinander angeordnet und gegebenenfalls strukturiert. Dieser Schichtaufbau wird beispielsweise durch Foliengießen, Stanzen, Siebdrucken, Laminieren, Schneiden, Sintern oder dergleichen erhalten. In gleicher Weise erfolgt auch der Aufbau der Heizeinrichtung, insbesondere von die Heizeinrichtung ergebende mäanderförmige elektrische Widerstandsbahnen. Um Reduktionen angrenzender Schichten zu verhindern oder einen Kriechstrom zu unterbinden, muß die Heizeinrichtung durch das Aufbringen einer Isolationsschicht abgeschirmt werden.

Um eine Erhöhung einer Meßgenauigkeit des Meßfühlers zu erreichen, ist bekannt, die Betriebstemperatur des Meßfühlers zu kontrollieren und gegebenenfalls einzuregeln. Hierzu ist bekannt, der Heizeinrichtung eine Meßeinrichtung zuzuordnen, über die in Abhängigkeit einer gemessenen Betriebstemperatur die Heizeinrichtung zu- beziehungsweise abschaltbar ist. Notwendig ist dabei, daß der Widerstand (im Sinne der Erfindung wird unter Widerstand der elektrische Innenwiderstand einer elektrischen Leiterbahn der Heizeinrichtung verstanden) der Heizeinrichtung sich in engen Toleranzbereichen bewegt, um eine Überbeziehungsweise Untersteuerung der Heizeinrichtung zu verhindern. Andernfalls wäre eine Verfälschung der Meßwerterfassung möglich.

Es hat sich dabei gezeigt, daß der Widerstand der Heizeinrichtung herstellungsbedingt besonders stark in dem Bereich seiner mäanderförmigen Struktur divergiert. Der Widerstand ist abhängig von der Temperatur, dem Widerstandskoeffizienten des verwendeten Materials sowie der Leiterbahnlänge der Heizeinrichtung. Herstellungsbedingt können nun einerseits die Zusammensetzung und damit der Widerstandskoeffizient einzelner Bereiche der Leiterbahnen der Heizeinrichtung verschieden sein und andererseits kann die Länge der Leiterbahnen der Heizeinrichtung unterschiedlich sein. Ein Abgleich des Widerstands ist in den bisherigen Verfahren nicht möglich. Infolgedessen müssen Meßfühler, die bei der Erstmessung einen für die Heizeinrichtung unbrauchbaren Widerstand aufweisen, aussortiert werden.

Die erläuterte beispielhafte Ausführung der keramischen Heizeinrichtung als Bestandteil des Sensorelementes eines Meßfühlers zur Bestimmung einer Sauerstoffkonzentration dient lediglich der Verdeutlichung der Nachteile des Standes der Technik. Diese Nachteile treten ebenso in anderen Anwendungen auf, die in ein keramisches Schichtsystem integrierte Widerstandsmäander aufweisen. Dies können beispielsweise Temperatursensoren oder passive Sensoren sein, die auf Widerstandsänderungen in Medien reagieren. Auch hier ist ein definierter Widerstand einer elektrischen Widerstandsbahn erforderlich.

Gassensoren gemäß des Standes der Technik sind aus US-A-4 464 244, DE-61-175 22 347 oder US-A-4 559 126 bekannt.

### Vorteile der Erfindung

Das erfindungsgemäße keramische Schichtsystem mit den im Anspruch 1 genannten Merkmalen bietet den Vorteil, daß dieses eine integrierte elektrische Widerstandsbahn aufweist, die einen definierten, reproduzierbaren elektrischen Widerstand aufweist. Dadurch, daß die die Widerstandsbahn bedeckende Schicht wenigstens eine Aussparung aufweist, durch die hindurch die Widerstandsbahn abgleichbar ist, kann nachträglich, das heißt nach Strukturierung des keramischen Schichtsystems, eine Einstellung des Widerstandes der Widerstandsbahn erfolgen. Bevorzugt ist, daß zumindest im Bereich benachbarter Leiterbahnabschnitte, die vorzugsweise als Widerstandsmäander ausgebildete Widerstandsbahn Verzweigungen und/oder geschlossene Flächen aufweist, wobei durch Auftrennen der Verzweigungen und/oder Flächen der Widerstand der Widerstandsbahn einstellbar ist. Durch eine derartige Ausgestaltung läßt sich mit einem leicht reproduzierbaren Layout in das keramische Schichtsystem bereits eine Struktur integrieren, die dem nachträglichen Abgleich des Widerstandes der Widerstandsbahn dient. Die Verzweigungen und/oder geschlossenen Flächen zwischen benachbarten Leiterbahnabschnitten bestehen aus dem gleichen Widerstandsmaterial wie die Widerstandsbahnen und werden mit diesen gemeinsam, insbesondere durch Siebdruck oder dergleichen, strukturiert.

Das erfindungsgemäße Verfahren zur Herstellung einer keramischen Heizeinrichtung mit den im Anspruch 7 genannten Merkmalen bietet den Vorteil, daß durch Serienfertigung herstellbare keramische Heizeinrichtungen erzielbar sind, die einen gleichgroßen Widerstand des Heizmäanders besitzen. Dadurch, daß der elektrische Widerstand des Heizmäanders nach dem Sintern des Schichtverbundes eingestellt wird, wobei in bevorzugter Weise eine effektive Länge einer den Heizmäander bildenden Leiterbahn nachträglich eingestellt wird, lassen sich herstellungsbedingte Toleranzen im Widerstand des Heizmäanders in einfacher Weise ausgleichen. Hierdurch wird vor allem möglich, beim bestimmungsgemäßen Einsatz derartiger keramischer Heizeinrichtungen diese mit einer Meß- und Regelschaltung zu kombinieren, wobei für die Meß- und Regelschaltung ein exakter, definierter und reproduzierbar herstellbarer Widerstand des Heizmäanders gegeben ist. Hierdurch lassen sich bei Serienfertigung der keramischen Heizeinrichtungen gleiche Meß- und Regelergebnisse erzielen, da fertigungsbedingte Widerstandsschwankungen, die zu Abweichungen von Meß- und Regelergebnissen führen würden, eliminiert sind.

Bevorzugt ist, wenn das keramische Schichtsystem mit in Anspruch 1 genannten Merkmalen als Heizeinrichtung in einem Sensorelement eines elektrochemischen Meßfühlers, insbesondere zur Bestimmung einer Sauerstoffkonzentration im Abgas von Verbrennungskraftmaschinen, verwendet wird.

Der Aufbau des Meßfühlers erfolgt bis zu der Schicht, die die Heizeinrichtung aufweist, in bekannter Weise durch Foliengießen, Stanzen, Siebdrucken, Laminieren, Schneiden, Sintern oder dergleichen. Die Leiterbahn der Heizeinrichtung weist in dem Bereich, der mäanderförmig ausgebildet ist, Verzweigungen und/oder ausgefüllte Flächen zwischen einzelnen Mäanderwindungen auf. Nachfolgende Schichten besitzen genau in diesen Bereichen Aussparungen.

Nachdem die für die Funktionalität des Meßfühlers benötigten Schichten aufgebracht wurden, kann vorzugsweise mittels eines Lasers der Abgleich des Widerstands des Heizmäanders durch eine entsprechende Korrektur der Länge der Leiterbahnen des Heizmäanders erfolgen. Dies kann durch Laserschnitt oder Lasertrimmung der Verzweigungen und/oder geschlossenen Flächen zwischen benachbarten Leiterbahnabschnitten des Heizmäanders in einfacher Weise erfolgen. Anschließend werden die Aussparungen luftdicht verschlossen, beispielsweise durch Verglasung. Die Aussparungen, durch die der Laserschnitt beziehungsweise die Lasertrimmung erfolgt, werden anschließend mit einem Füllstoff verschlossen, wobei insbesondere eine Verglasung mit einer Glaskeramik erfolgt.

In bevorzugter Ausgestaltung der Erfindung kann vorgesehen sein, daß die die Heizeinrichtung abdeckenden Schichten derart ausgebildet sind, daß durch diese hindurch ein Laserschnitt oder eine Lasertrimmung der Verzweigungen und/oder ausgefüllten Flächen erfolgen kann. Durch die thermische Einwirkung während der Laserbehandlung auf die den Heizmäander abdeckende Schicht können diese gleichzeitig in einfacher Weise verglast werden, wobei diese Schichten entsprechende Glasbildner aufweisen.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine schematische Perspektivansicht eines Schichtsystems;
- Figuren 2a und 2b: zwei Ausführungsformen eines Heizmäanders;
- Figur 3: eine schematische Draufsicht auf ein Schichtsystem und
- Figuren 4a und 4b: schematische Schnittansichten von Schichtsystemen.

### Beschreibung der Ausführungsbeispiele

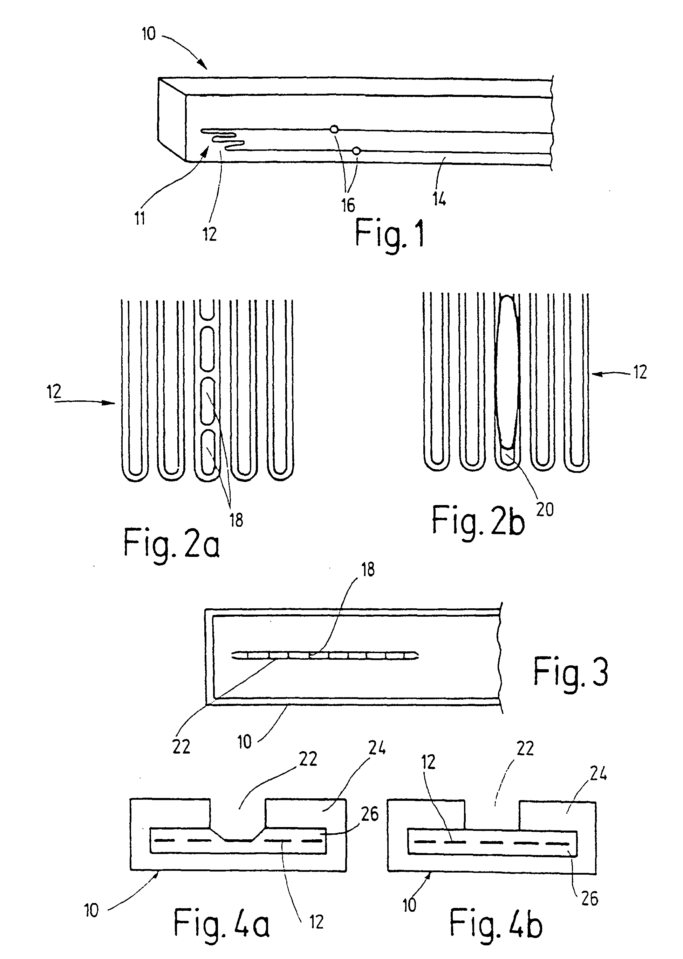

In der Figur 1 ist in schematischer Weise die Lage einer Heizeinrichtung 11 in einem Schichtsystem 10 dargestellt. Die Heizeinrichtung 11 besteht aus Leiterbahnen 14, die über Kontaktpunkte 16 mit einer mäanderförmigen Ausformung der Heizeinrichtung 11 - im folgenden als Widerstandsmäander 12 bezeichnet - verbunden sind. Die Herstellung eines solchen Schichtsystems 10 erfolgt schichtweise, beispielsweise durch Foliengießen, Stanzen, Siebdrucken, Laminieren, Schneiden oder Sintern.

Solche Schichtsysteme 10 sind beispielsweise Bestandteile von Meßfühlern, die zur Erfassung von Gaskomponenten in einem Abgas von Verbrennungskraftmaschinen von Kraftfahrzeugen dienen können. Ferner können die Schichtsysteme 10 Bestandteil von Temperatursensoren sein. Denkbar ist auch ein Einsatz in Sensoren, die mit einer Widerstandsänderung bei Anwesenheit bestimmter Medien (Gase, Flüssigkeiten oder dergleichen) reagieren. Zur Gewährung einer solchen Funktionalität weisen die Meßfühler weitere Bauelemente, auf die hier nicht näher eingegangen werden soll, auf. Bei einem solchen Meßfühler würde dann das Schichtsystem 10 ein Sensorelement darstellen.

Die Figuren 2a und 2b zeigen zwei Ausführungsformen des Widerstandsmäanders 12. Zwischen zwei benachbarten Windungen des Mäanders 12 sind zum einen Verzweigungen 18 (Figur 2a) und/oder zum anderen ausgefüllte Flächen 20 (Figur 2b) aus dem den Leiterbahnen 14 entsprechenden Material geformt. Die Fertigung der das Heizelement beinhaltenden Schicht erfolgt in an sich bekannter Weise, beispielsweise durch Siebdrucken der Leiterbahnen 14. Der Widerstandsmäander 12 besteht dabei üblicherweise aus einem leitfähigen Metall, einer Legierung oder einem Cermet.

In Figur 3 ist eine schematische Draufsicht auf ein Schichtsystem 10 mit einer Aussparung 22 dargestellt. Am Boden der Aussparung 22 befindet sich der Widerstandsmäander 12 und zwar genau die Bereiche des Widerstandsmäanders 12, in denen einzelne Windungen durch Verzweigungen 18 oder durch ausgefüllte Flächen 20 verbunden sind.

Die Figuren 4a und 4b zeigen eine schematische Schnittansicht des Schichtsystems 10. Die Heizeinrichtung wird hierbei üblicherweise von einer Isolationsschicht 26 gegenüber einer Schicht 24 abgeschirmt, um eine Reduktion der Schicht 24 oder einen Kriechstromfluß zu verhindern. Über die Aussparung 22 kann die Bearbeitung des Widerstandsmäanders 12 erfolgen.

Die Herstellung des Schichtsystems 10 der Figur 4a kann bevorzugt durch nachfolgende Arbeitsschritte geschehen. Zunächst wird die Heizeinrichtung 11, die den Widerstandsmäander 12 mit den Verzweigungen 18 oder den ausgefüllten Flächen 20 aufweist, nach dem üblichen Verfahren hergestellt. Die Isolationsschicht 26 weist in den Bereichen, in denen die Verzweigungen 18 oder ausgefüllte Flächen 20 des Mäanders 12 angeordnet sind, die Aussparung 22 auf. Ebenso werden alle nachfolgenden Schichten, in der Regel eine abschließende Schutzschicht, derart modifiziert, daß auch sie die passende Aussparung 22 aufweisen.

In einer weiteren bevorzugten Ausgestaltung des Schichtsystems 10 gemäß Figur 4b bedeckt die Isolationsschicht 26 auch die Bereichen der Aussparung 22. Die Isolationsschicht 26 ist dabei derart ausgestaltet, daß ein Laser diese Schicht 26 durchdringen kann und ein Abgleich des Widerstandsmäanders 12 ermöglicht wird. Dabei kommt es gleichzeitig durch die thermische Einwirkung des Lasers zur Verglasung dieser Schicht 26. Die Schicht 26 enthält hierzu entsprechende Glasbildner.

Der Laserabgleich des Widerstandsmäanders 12 kann nun wie folgt durchgeführt werden. Die über die Aussparung 22 erreichbaren Verzweigungen 18 oder ausgefüllte Flächen 20 werden mittels Laserschnitt getrennt beziehungsweise getrimmt. Während dieses Vorgangs kann eine Widerstandsänderung der Heizeinrichtung 11 durch eine hier nicht näher erläuterte Schaltungsanordnung verfolgt werden. Durch den Laserschnitt beziehungsweise die Lasertrimmung erhöht sich der Widerstand, da sich die Länge der Leiterbahnen 14 vergrößert. Auf diese Weise lassen sich Schichtsysteme 10 herstellen, die gleichgroße Innenwiderstände der Widerstandsmäander 12 aufweisen.

Die Aussparung 22 wird nach dem Laserabgleich durch eine Füllstoff verschlossen, vorzugsweise durch eine Verglasung mittels einer Glaskeramik. Auf diese Weise kann die Heizeinrichtung 11 vor mechanischen oder chemischen Einflüssen geschützt werden.

## Patentansprüche

1. Keramisches Schichtsystem (10) mit mindestens einer in das keramische Schichtsystem integrierten elektrischen Widerstandsbahn (14), wobei das Schichtsystem mindestens eine Schicht (24) umfaßt, die die Widerstandsbahn nach außen hin bedeckt, **dadurch gekennzeichnet, daß** die die Widerstandsbahn bedeckende Schicht wenigstens eine Aussparung (22) aufweist, durch die hindurch die Widerstandsbahn abgleichbar ist.

2. Keramisches Schichtsystem nach Anspruch 1, **dadurch gekennzeichnet, daß** die Widerstandsbahn ein Widerstandsmäander (12) ist.

3. Keramisches Schichtsystem nach Anspruch 2, **dadurch gekennzeichnet, daß** zumindest im Bereich benachbarter Leiterbahnabschnitte die Widerstandsbahn Verzweigungen (18) und/oder geschlossene Flächen (20) aufweist, wobei durch Auftrennen der Verzweigungen und/oder Flächen der Widerstand der Widerstandsbahn des Widerstandsmäanders einstellbar ist.

4. Keramisches Schichtsystem nach Anspruch 3, **dadurch gekennzeichnet, daß** die Verzweigungen (18) und/oder geschlossenen Flächen (20) im Bereich der wenigstens einen Aussparung (22) ausgebildet sind.

5. Keramisches Schichtsystem nach einem der vorhergehenden Ansprüche, **dadurch gekennzeichnet, daß** die wenigstens eine Aussparung nach dem Abgleich der Widerstandsbahn mit einem Füllstoff verschließbar ist.

6. Keramisches Schichtsystem nach Anspruch 5, **dadurch gekennzeichnet, daß** der Füllstoff eine Glaskeramik ist.

7. Verfahren zur Herstellung einer keramischen Heizeinrichtung, nach einem der Ansprüche 1 bis 6 wobei die Heizeinrichtung durch nacheinanderfolgendes Anordnen von Schichten und eines Heizmäanders (12), sowie nachfolgendem Sintern des Schichtverbundes erhalten wird, **dadurch gekennzeichnet, daß** der elektrische Widerstand des Heizmäanders (12) nach dem Sintern des Schichtverbundes eingestellt wird.

8. Verfahren nach Anspruch 7, **dadurch gekennzeichnet, daß** eine effektive Länge einer den Heizmäander bildenden Leiterbahn nachträglich eingestellt wird.

9. Verfahren nach Anspruch 8, **dadurch gekennzeichnet, daß** der Heizmäander mit einem Layout erzeugt wird, das zumindest im Bereich benachbarter Leiterbahnen Verzweigungen und/oder geschlossene Flächen aufweist, und durch Auftrennen der Verzweigungen und/oder Flächen die Länge der Leiterbahn des Widerstandsmäanders eingestellt wird.

10. Verfahren nach Anspruch 9, **dadurch gekennzeichnet, daß** bei der Herstellung des Schichtverbundes der Heizeinrichtung innerhalb von dem Heizmäander abdeckenden Schichten eine Aussparung strukturiert wird, die im Bereich der Verzweigungen und/oder Flächen angeordnet ist.

11. Verfahren nach Anspruch 10, **dadurch gekennzeichnet, daß** die Einstellung der Länge der Leiterbahn durch einen Laserabgleich erfolgt.

12. Verfahren nach Anspruch 11, **dadurch gekennzeichnet, daß** der Laserabgleich durch die Aussparung erfolgt.

13. Verfahren nach Anspruch 7 bis 12, **dadurch gekennzeichnet, daß** die Aussparung nach dem Abgleich mit dem Füllstoff verschlossen wird.

14. Verfahren nach Anspruch 13, **dadurch gekennzeichnet, daß** die Aussparung durch Verglasung mit einer Glaskeramik verschlossen wird.

15. Verfahren nach Anspruch 14, **dadurch gekennzeichnet, daß** die Verglasung während des Laserabgleichs durch eine thermische Einwirkung des Lasers auf eine Glasbildner enthaltende Schicht des Schichtverbundes der Heizeinrichtung erfolgt.

16. Verwendung des keramischen Schichtsystems (10) nach einem der Ansprüche 1 bis 6 als Heizeinrichtung in einem Sensorelement eines elektrochemischen Meßfühlers.

17. Verwendung des keramischen Schichtsystems (10) nach einem der Ansprüche 1 bis 6 als Meßwiderstand in einem Sensorelement eines Temperatursensors.

18. Verwendung des keramischen Schichtsystems (10) nach einem der Ansprüche 1 bis 6 in passiven Sensoren, die mit einer Widerstandsänderung bei Anwesenheit bestimmter Medien reagieren.

## Claims

1. Ceramic layer system (10) having at least one electrical resistor track (14) integrated in the ceramic layer system, the layer system comprising at least one layer (24) which covers the resistor track with respect to the outside, **characterized in that** the layer which covers the resistor track has at least one cutout (22), through which the resistor track can be trimmed.

2. Ceramic layer system according to Claim 1, **characterized in that** the resistor track is a meandering resistor (12).

3. Ceramic layer system according to Claim 2, **characterized in that** at least in the region of adjacent conductor track portions the resistor track has branches (18) and/or closed surfaces (20), it being possible to set the resistance of the resistor track of the meandering resistor by separating the branches and/or surfaces.

4. Ceramic layer system according to Claim 3, **characterized in that** the branches (18) and/or closed surfaces (20) are formed in the region of the at least one cutout (22).

5. Ceramic layer system according to one of the preceding claims, **characterized in that** the at least one cutout can be closed off using a filler after the resistor track has been trimmed.

6. Ceramic layer system according to Claim 5, **characterized in that** the filler is a glass-ceramic.

7. Process for producing a ceramic heating device as described in one of Claims 1 to 6, in which the heating device is obtained by successively arranging layers and a meandering heating element (12) and subsequently sintering the layer composite, **characterized in that** the electrical resistance of the meandering heating element (12) is set after the layer composite has been sintered.

8. Process according to Claim 7, **characterized in that** the effective length of a conductor track which forms the meandering heating element is set retrospectively.

9. Process according to Claim 8, **characterized in that** the meandering heating element is produced with a layout which, at least in the region of adjacent conductor tracks, has branches and/or closed surfaces, and the length of the conductor track of the meandering resistor is set by separating the branches and/or surfaces.

10. Process according to Claim 9, **characterized in that** during the production of the layer composite of the heating device, a cutout, which is arranged in the region of the branches and/or surfaces, is structured within layers that cover the meandering heating element.

11. Process according to Claim 10, **characterized in that** the setting of the length of the conductor track is effected by laser trimming.

12. Process according to Claim 11, **characterized in that** the laser trimming takes place through the cutout.

13. Process according to Claims 7 to 12, **characterized in that** the cutout is closed up using the filler after the trimming operation.

14. Process according to Claim 13, **characterized in that** the cutout is closed up by glazing with a glass-ceramic.

15. Process according to Claim 14, **characterized in that** the glazing takes place during the laser trimming as a result of a thermal action of the laser on a layer containing a glass-forming agent within the layer composite of the heating device.

16. Use of the ceramic layer system (10) according to one of Claims 1 to 6 has a heating device in a sensor element of an electrochemical measurement sensor.

17. Use of the ceramic layer system (10) according to one of Claims 1 to 6 as a measuring resistor in a sensor element of a temperature sensor.

18. Use of the ceramic layer system (10) according to one of Claims 1 to 6 in passive sensors which react by changing their resistance if defined media are present.

## Revendications

1. Système de couche céramique (10) comprenant au moins une piste résistive (14) électrique intégrée dans le système de couche céramique, le système de couche comprenant au moins une couche (24) qui recouvre la piste résistive vers l'extérieur,
**caractérisé en ce que**
la couche recouvrant la piste résistive présente au moins un évidement (22) à travers lequel on peut ajuster la piste résistive.

2. Système de couche céramique selon la revendication 1,
**caractérisé en ce que**
la piste résistive est un méandre résistif (12).

3. Système de couche céramique selon la revendication 2,
**caractérisé en ce que**
la piste résistive présente des raccords (18) et/ou des surfaces fermées (20) au moins dans la zone des sections de pistes conductrices avoisinantes, la résistance de la piste du méandre résistif étant réglable par une séparation des raccords et/ou des surfaces.

4. Système de couche céramique selon la revendication 3,
**caractérisé en ce que**
les raccords (18) et/ou les faces fermées (20) sont constitués dans la zone d'au moins un évidement (22).

5. Système de couche céramique selon l'une des revendications précédentes,
**caractérisé en ce qu'**
au moins un évidement peut être fermé par une matière de remplissage après l'ajustage de la piste résistive.

6. Système de couche céramique selon la revendication 5,
**caractérisé en ce que**
la matière de remplissage est une vitrocéramique.

7. Procédé de fabrication d'un dispositif de chauffage céramique selon l'une des revendications 1 à 6, le dispositif de chauffage étant obtenu par une stratification de couches et d'un méandre de chauffage (12) ainsi que par vitrification subséquente du composite stratifié,
**caractérisé en ce que**
la résistance électrique du méandre de chauffage (12) est réglée après la vitrification du composite stratifié.

8. Procédé selon la revendication 7,
**caractérisé en ce qu'**
on règle ultérieurement la longueur effective d'une piste conductrice constituant le méandre de chauffage.

9. Procédé selon la revendication 8,
**caractérisée en ce que**
le méandre de chauffage est conçu avec formation de raccords et/ou de surfaces fermées au moins dans la zone des pistes conductrices avoisinantes, et on règle ainsi la longueur de la piste conductrice du méandre de résistance par séparation des raccords et/ ou des surfaces.

10. Procédé selon la revendication 9,
**caractérisé en ce que**
lors de la fabrication du système de couche du dispositif de chauffage, un évidement structuré à l'intérieur des couches recouvrant le méandre de chauffage est disposé dans la zone des raccords et/ou des surfaces.

11. Procédé selon la revendication 10,
**caractérisé en ce que**
le réglage de la longueur de la piste conductrice est effectué par ajustage au laser.

12. Procédé selon la revendication 11,
**caractérisé en ce que**
l'ajustage au laser est effectué à travers l'évidement.

13. Procédé selon l'une des revendications 7 à 12,
**caractérisé en ce que**
l'évidement est fermé avec des matières de remplissage après l'ajustage.

14. Procédé selon la revendication 13,
**caractérisé en ce que**
l'évidement est fermé par vitrification avec une vitrocéramique.

15. Procédé selon la revendication 14,
**caractérisé en ce que**
la vitrification pendant l'ajustage au laser est effectuée par une opération thermique au laser sur une couche du composite stratifié du dispositif de chauffage contenant du vitrifiant.

16. Utilisation du système de couche céramique (10) selon l'une des revendications 1 à 6, en tant que dispositif de chauffage dans un élément de capteur d'un détecteur électrochimique.

17. Utilisation du système de couche céramique (10) selon l'une des revendications 1 à 6, en tant que résistance de précision dans un élément de capteur d'un capteur de température.

18. Utilisation du système de couche céramique (10) selon l'une des revendications 1 à 6, dans des capteurs passifs qui réagissent en cas de présence de certains fluides par un changement de la résistance.
